# EUROPÄISCHE PATENTANMELDUNG

(11) **EP 1 457 674 A2**
(43) Veröffentlichungstag der Anmeldung: **15.09.2004**
(21) Anmeldenummer: 04005102.1
(22) Anmeldetag: 04.03.2004
(51) Int. Cl.: F03D 11/04

(54) **Fundament für Offshore Windenergieanlagen**

(30) Priorität: 10.03.2003 DE 10310708
(71) Anmelder: Mahlke, Bernd, 27619 Schiffdorf (DE)
(72) Erfinder: Mahlke, Bernd, 27619 Schiffdorf (DE)

(57) **Zusammenfassung**

2.1 Die erfindungsgemäße Lösung hat gegenüber dem Stand der Technik den Vorteil, dass weniger Material eingesetzt wird und geringere Kosten für Fertigung, Zwischenlagerung, Transport und Errichtung entstehen.
2.2 Die Ausführung der Fundamente ist dergestalt, dass ein zentrales Rohr am Standort in den Seegrund eingebracht wird und eine Stützkonstruktion über das zentrale Rohr positioniert und abgesenkt wird. Die Stützbeine werden im Seegrund mit Pfählen verankert und der obere Ring wird mit dem zentralen Rohr formschlüssig verbunden. Durch diese Stützkonstruktion wird das zentrale Rohr gegenüber Belastungen so formstabil, dass der sichere Betrieb der Offshore Windenergieanlage möglich ist.
2.3 Das Fundament eignet sich für die Aufstellung von Offshore Windenergieanlagen.

## Beschreibung

Die Erfindung betrifft die Ausführung von Fundamenten für Windenergieanlagen, die offshore aufgestellt werden.

Für die Fundamentierung von Offshore Windenergieanlagen gibt es einige wenige praktisch ausgeführte und andere in der Planung befindliche Lösungen. Sogenannte Schwerkraftfundamente, große und schwere Stahlbetonstrukturen, werden in geringen Wassertiefen eingesetzt.

Fundstelle:
1) Windpark Middelgrunden, Dänemark, Windpark Nysted, Dänemark
   So genannte Monopiles, Stahlrohrstrukturen mit großem Durchmesser, relativ großer Länge und großen Rohrwanddicken, werden in größeren Wassertiefen eingesetzt, als es bei Schwerkraftfundamenten der Fall ist.
   Fundstellen:
2) Windpark Horns Rev, Dänemark
3) Guyed Support Structures for Offshore Wind Turbines, Carey, 2. Symposium Offshore-Windenergie, 09.09.2002, Hannover
   Sogenannte Tripods und Jackets, große und schwere Rohrfachwerkstrukturen, werden in größeren Wassertiefen eingesetzt, als es bei Monopiles der Fall ist. Fundstellen:
4) Nachweise und Sicherheitskonzepte für die Gründung von Offshore-Windenergieanlagen in der Deutschen Bucht, Richwien, Lesny, Wiemann, 2. Symposium Offshore-Windenergie, 09.09.2002, Hannover
5) Forschungsplattform in der Nordsee (FINO), Rakebrandt-Gräßner, Germanische Lloyd, Hamburg, 2002

Der Nachteil der Monopiles besteht in ihren begrenzten Steifigkeiten und Standfestigkeiten, was unzulässige horizontale Auslenkungen durch die Belastungen im Betrieb der Offshore Windenergieanlagen zur Folge hat. Sie werden daher nur an Standorten mit geringen Wassertiefen verwendet.

Der Nachteil der Tripods und Jackets besteht in ihren großen Abmessungen und Massen, wodurch ein erheblicher Aufwand zur Fertigung und hohe Kosten entstehen, nur wenige Standorte für die Fertigung in Frage kommen sowie große und schwere Transport- und Hebemittel an Land und auf See notwendig werden.

Die Erfindung besteht in der Ausführung der Fundamente für Offshore Windenergieanlagen dergestalt, dass ein zentrales Rohr großer Abmessungen, das auf den Anlagen zur Fertigung von Türmen für Windenergieanlagen gefertigt werden kann, am Standort auf See in den Grund eingebracht wird und eine Stützkonstruktion, ausgeführt mit drei oder mehr Stützbeinen, über das in den Seegrund eingebrachte zentrale Rohr positioniert und dann abgesenkt wird. Für den Transport werden die Stützbeine mit Streben so stabilisiert, dass die Stützkonstruktion über das zentrale Rohr geschwommen werden kann. Die Stützbeine werden im Seegrund mit Pfählen verankert und der obere Ring, mit dem die Stützbeine verbunden sind, wird mit dem zentralen Rohr formschlüssig mit einem geeigneten Füllmaterial verbunden. Die Stützkonstruktion kann auch aus einzelnen Stützbeinen bestehen, die am Errichtungsort mit dem zentralen Rohr formschlüssig verbunden und im Seegrund verankert werden. Die formschlüssige Verbindung wird so ausgeführt, dass eine vertikale Bewegung des zentralen Rohres infolge von Baugrundsetzungen möglich ist, ohne dass vertikale Kräfte auf die Stützkonstruktion übertragen werden.

Durch diese Stützkonstruktion wird das zentrale Rohr gegenüber den Belastungen im Betrieb der Offshore Windenergieanlage auch bei großen Wassertiefen so formstabil, dass ein sicherer Betrieb gewährleistet ist.

Das zentrale Rohr kann in Höhe der beabsichtigten Eindringtiefe in den Seegrund mit einem Steg versehen sein, wodurch ein weiteres Eindringen unter Belastung vermieden wird.

Die erfindungsgemäße Lösung für Fundamente von Offshore Windenergieanlagen hat den Vorteil, dass die Komponenten der Fundamente, die zentralen Rohre und die Stützkonstruktionen, gegenüber den sonst zum Einsatz kommenden Tripods oder Jackets weniger Material erfordern und demzufolge leichter sind, einen weit geringeren Fertigungsaufwand zur Folge haben und weitaus kleinere Transportund Hebemittel erfordern. Des Weiteren wird der spätere Rückbau vereinfacht. Auf Pontons oder Schiffe zum Transportieren der zentralen Rohre und der Stützkonstruktionen kann vollständig oder teilweise verzichtet werden, wenn die Komponenten schwimmfähig ausgelegt und auch schwimmend zum Errichtungsort auf See transportiert werden.

Die Stützkonstruktion nach Patentanspruch 1 kann schwimmend über das zentrale Rohr positioniert werden, so dass nur noch relative kleine Hebemittel zur Stabilisierung beim Absenken derselben notwendig sind.

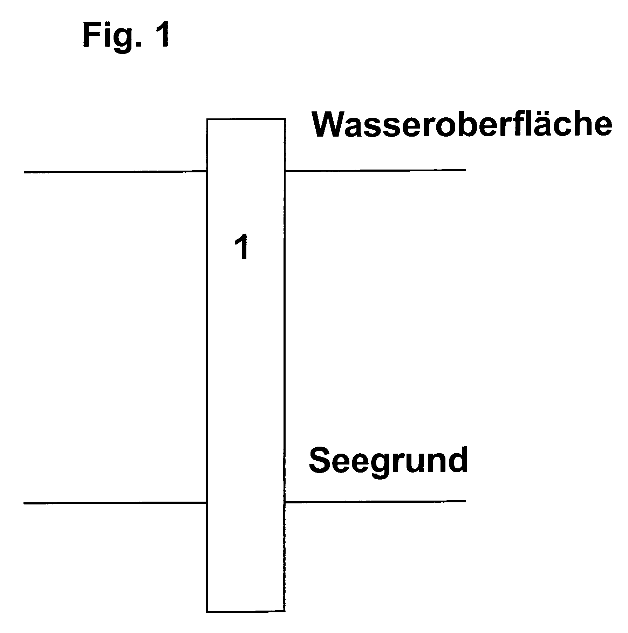

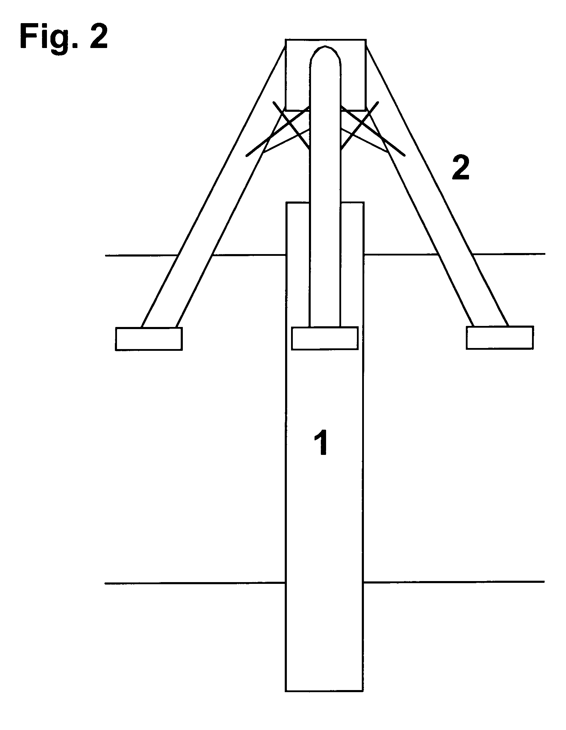

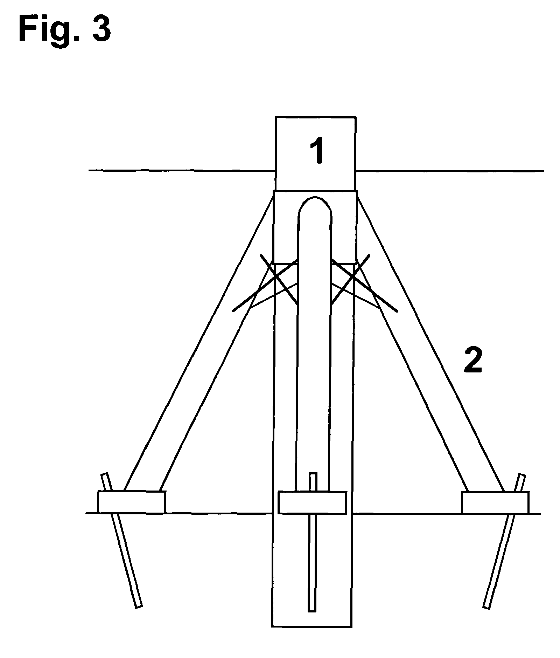

Fig. 1, 2 und 3 zeigen die erfindungsgemäße Ausführung eines Fundamentes für Offshore Windenergieanlagen nach Patentanspruch 1. In Fig. 1 ist das zentrale Rohr (1) dargestellt, wie es in den Seegrund eingebracht wurde. In Fig. 2 ist die Stützkonstruktion (2), hier mit drei Stützen, dargestellt, wie sie schwimmend zum bereits errichteten zentralen Rohr transportiert und darüber positioniert wird, um dann abgesenkt zu werden. Nach abgeschlossener Positionierung wird die Stützkonstruktion (2) mit Pfählen im Seegrund verankert und die Pfähle mit der Stützkonstruktion formschlüssig verbunden, in Fig. 3 dargestellt. Abschließend wird der Zwischenraum zwischen dem oberen Ring der Stützkonstruktion und dem zentralen Rohr mit einem geeigneten Füllmaterial formschlüssig verbunden.

Die Stützbeine der Stützkonstruktionen nach Patentanspruch 2 werden einzeln mit einem Hebemittel in Einbaulage am zentralen Rohr abgesenkt, mit dem oberen Ende in die am zentralen Rohr vorhandenen Aufnahmen geführt, mit der die Stützbeine formschlüssig verbunden werden. Das untere, auf dem Seegrund stehende Ende der Standbeine wird im Seegrund verankert.

## Patentansprüche

1. Fundament für Offshore Windenergieanlagen,
**dadurch gekennzeichnet,**
**dass** das Fundament aus einem zentralen Rohr, das als eine Komponente gefertigt und am Standort in den Seegrund getrieben oder gespült wird, und einer Stützkonstruktion mit drei oder mehr Stützbeinen besteht, die als eine zweite Komponente gefertigt, über das errichtete zentrale Rohr positioniert, abgesenkt und im Seegrund verankert wird und anschließend beide Komponenten formschlüssig verbunden werden.

2. Fundament nach Anspruch 1,
**dadurch gekennzeichnet,**
**dass** die Stützbeine der Stützkonstruktion als Einzelkomponenten gefertigt und am errichteten zentralen Rohr abgesenkt, mit demselben formschlüssig verbunden und im Seegrund verankert werden.

3. Fundament nach Anspruch 1,
**dadurch gekennzeichnet,**
**dass** das zentrale Rohr durch einen horizontalen Steg am weiteren Eindringen in den Seegrund gehindert wird.

4. Fundament nach Anspruch 1 und 2,
**dadurch gekennzeichnet,**
**dass** die formschlüssige Verbindung zwischen zentralem Rohr und Stützkonstruktion eine vertikale Bewegung des zentralen Rohres infolge von Baugrundsetzungen zulässt, ohne dass vertikale Kräfte auf die Stützkonstruktion übertragen werden.
